# EUROPÄISCHE PATENTSCHRIFT

(11) **EP 4 491 448 B1**
(45) Veröffentlichungstag und Bekanntmachung des Hinweises auf die Patenterteilung: **03.09.2025**
(21) Anmeldenummer: 23184683.3
(22) Anmeldetag: 11.07.2023
(51) Int. Cl.: B60N 2/00, B60N 2/56, B61D 33/00, B60R 21/015

(54) **VERFAHREN ZUM ERMITTELN EINES BELEGUNGSZUSTANDES EINES SITZES UND SITZHEIZUNG**
METHOD FOR DETERMINING THE OCCUPANCY STATE OF A SEAT AND SEAT HEATER
PROCÉDÉ DE DÉTERMINATION D'UN ÉTAT D'OCCUPATION D'UN SIÈGE ET CHAUFFAGE DE SIÈGE

(43) Veröffentlichungstag der Anmeldung: 15.01.2025
(73) Patentinhaber: Sefar AG, 9410 Heiden (CH)
(72) Erfinder: Hegelbach, Reto, 9010 St. Gallen (CH); Cheffi, Roua, 9000 St. Gallen (CH); Campa, Andrej, 1353 Borovnica (SI); Kovacic, Aljaz, 6250 Ilirska Bistrica (SI); Mihelin, Marko, 3000 Celje (SI); Smolnikar, Miha, 1233 Dob (SI)
(74) Vertreter: Wunderlich & Heim Patentanwälte PartG mbB

(56) Entgegenhaltungen:
- EP-A2- 2 325 060
- DE-A1- 102012 223 342
- US-A1- 2009 295 554

## Beschreibung

Die Erfindung betrifft ein Verfahren zum Ermitteln eines Belegungszustandes eines Sitzes mittels einer im Sitz vorgesehenen Sitzheizung, welche eine Heizeinrichtung mit mehreren, insbesondere länglichen, Heizelementen und einem ersten und einem zweiten Anschluss aufweist.

Ferner betrifft die Erfindung eine Sitzheizung mit einer Ermittlungseinrichtung eines Belegungszustandes des Sitzes. Diese Sitzheizung weist eine Heizeinrichtung mit mehreren, insbesondere länglichen, Heizelementen und mit einem ersten und einem zweiten Anschluss auf. Des Weiteren ist eine Energieversorgungs- und Steuerungseinrichtung zum Versorgen der Heizeinrichtung mit Heizenergie durch das Anlegen eines Heizstroms vorgesehen. Die Ermittlungseinrichtung ist ausgelegt und eingerichtet, zum Ermitteln des Belegungszustandes des Sitzes eine Wechselspannung anzulegen.

Die Zugindustrie sieht sich gerade oberhalb des nördlichen beziehungsweise unterhalb des südlichen Wendekreises einen zunehmenden Bedarf an kostenoptimierten Betriebsmitteln in den jeweiligen kalten Jahreszeiten gegenüber konfrontiert. So überrascht es nicht, dass nach energieeffizienten Betriebsmitteln zum Erhalten einer Komforttemperatur in Passagierzügen gesucht wird. Hier werden momentan üblicherweise Heizkonzepte mit dezentralen Heizwendel, welche mit Luft umströmt werden oder Konzepte mit zentraler Lüftung verwendet. Beiden ist gemeinsam, dass der gesamte Innenraum aufgeheizt werden muss, aber benötigt wird die Hitze nur lokal beim Passagier.

So wird mittels Umluft der Innenraum aufgeheizt, wodurch mehr Energie aufgewendet wird, als wenn eine Sitzheizung verwendet würde.

In der Vergangenheit waren der Einsatz von Sitzheizungen aufgrund der nötigen zusätzlichen Verkabelung als System in der Zugindustrie finanziell uninteressant. Gerade durch die sitzplatzbezogene Stromversorgung von USB und Netzspannung für Mobiltelefone, Tablet, Notebooks, etc. ist ein Kabelbaum nun oft vorhanden. So müssen keine zusätzlichen Verkabelungen für den Sitzplatz erfolgen, da diese schon enthalten sind und machen somit das Sitzbezogene-Heizkonzept effizient und finanziell attraktiv. Weiter ist die Zugindustrie, insbesondere in Mitteleuropa, auf der Suche nach einer Sitzbelegungserkennung. Für die Zugbetreiber sind solche Daten von fundamentalem Interesse. Wissen diese in Echtzeit, wie viele Sitze belegt sind, kann die Haltezeit durch geeignete Algorithmen und abgeleitet davon optimierten Personenströmen in den jeweiligen Bahnhöfen optimiert werden. Fahrpläne können so besser eingehalten und weiter optimiert werden.

Gattungsgemäße Sitzheizungen sind beispielsweise aus der EP 2 325 060 A2 und der DE 10 2012 223 342 A1 bekannt.

Der Erfindung liegt die **Aufgabe** zugrunde, ein Verfahren zum Ermitteln eines Belegungszustandes mittels einer im Sitz vorgesehenen Sitzheizung und eine diesbezügliche Sitzheizung anzugeben, welche eine zuverlässige Ermittlung des Belegungsstatus auf effiziente Weise ermöglicht.

Diese Aufgabe wird erfindungsgemäß durch ein Verfahren mit den Merkmalen des Anspruchs 1 sowie einer Sitzheizung mit den Merkmalen des Anspruchs 13 gelöst. Bevorzugte Ausführungsformen der Erfindung sind in den Unteransprüchen, in der Beschreibung sowie in den Figuren und deren Erläuterung angegeben.

Das erfindungsgemäße Verfahren ist dadurch weitergebildet, dass an die Heizeinrichtung zum Ermitteln des Belegungszustandes eine Wechselspannung mit einem Frequenzdurchlauf von 10 MHz bis 40 MHz oder einem Teilbereich davon angelegt wird. Dies erfolgt bevorzugt über die beiden Anschlüsse. Über die beiden Anschlüsse wird auch der Amplitudenverlauf der Spannung über den Frequenzdurchlauf bestimmt, beispielsweise aufgezeichnet. Anschließend wird der ermittelte Amplitudenverlauf der Spannung über den Frequenzdurchlauf mit einem Referenzverlauf verglichen. Der Sitz wird als belegt erkannt, wenn der Amplitudenverlauf der Spannung sich mindestens um 5% vom Referenzverlauf unterscheidet.

Der Erfindung liegen mehrere Erkenntnisse zugrunde. Zum einen wurde erkannt, dass die Heizeinrichtung nicht nur zum Erwärmen des Sitzes verwendet werden kann, sondern grundsätzlich auch, um Belegungszustände des Sitzes zu ermitteln. Hierbei haben entsprechende Entwicklungen ergeben, dass eine genauere und detailliertere Detektion dann realisiert werden kann, wenn die Heizeinrichtung mit einer Wechselspannung beaufschlagt wird, welche nicht zwingend nur eine Frequenz aufweist, sondern einen Frequenzdurchlauf vorgesehen ist. Die Frequenz der Wechselspannung ändert sich also während des Beaufschlagens. Dieser Frequenzdurchlauf kann im Bereich zwischen 10 MHz und 40 MHz vorgesehen sein. Es wurde erkannt, dass insbesondere ein Frequenzdurchlauf in diesem Bereich beziehungsweise einem Teilbereich hiervon besonders gut geeignet ist, einen Belegungszustand festzustellen.

Der Frequenzdurchlauf kann beispielsweise so gestaltet sein, dass die Frequenz der Wechselspannung konstant über die Zeit über den gewünschten Frequenzbereich ansteigt. Es kann aber auch ein An - und Absteigen oder ein zyklischer Verlauf vorgesehen sein.

Durch das Vorhandensein eines menschlichen Körpers auf dem Sitz verändert sich der Amplitudenverlauf der Spannung, der an den beiden Anschlüssen gemessen werden kann, da dieser im Wesentlichen durch die zusätzliche Körpermasse und den Wassergehalt der Körpermasse und dergleichen beeinflusst wird.

Es wäre wünschenswert, zwischen einer Belegung durch einen Menschen und - wie es beispielsweise in Zugabteilen üblich ist - der Belegung durch Gepäckstücke unterscheiden zu können. Auch ein Gepäckstück per se kann eine Wechselspannung, die durch eine Heizeinrichtung der Sitzheizung geleitet wird, beeinflussen. Erfindungsgemäß wurde jedoch festgestellt, dass gerade bei einem Frequenzverlauf im Bereich von 10 MHz bis 40 MHz eine derartige Beeinflussung eher gering ist, beziehungsweise detektierbare Unterschiede zwischen einem Menschen und einem Gepäckstück, wie einem Rucksack, vorliegen.

Für eine anschließende und flexible Auswertung ist es bevorzugt, wenn zuvor ein Referenzverlauf des Amplitudenverlaufes der Spannung aufgezeichnet wurde und beispielsweise abgespeichert wurde. Der oder die mittels der Messung ermittelten Amplitudenverläufe der Spannung werden dann mit dem Referenzverlauf verglichen.

Dies bietet entsprechend der Erfindung den Vorteil, dass Einflüsse wie die exakte Verkabelung oder unterschiedliche Sitzbezüge bereits bei der Auswertung auf einfache Art und Weise berücksichtigt werden können. Erfahrungsgemäß weist eine Abweichung von mindestens 5% vom Referenzverlauf darauf hin, dass der Sitz von einer Person belegt ist. Bei der Abweisung kann es sich sowohl um eine Dämpfung als auch um eine Änderung ins Positive handeln. Dies kann beispielsweise durch Einkopplungen oder dergleichen erfolgen.

Bevorzugt ist es, wenn die Heizeinrichtung zum Erwärmen des Sitzes mit einem Heizstrom betrieben wird und der Heizstrom unterschiedlich zu der Wechselspannung zum Ermitteln des Belegungszustandes des Sitzes ist. Aus Effizienzgründen ist es vorteilhaft, wenn für beide Energieeinspeisungen jeweils der erste und der zweite Anschluss verwendet werden. Anders ausgedrückt wird entweder die Heizeinrichtung mittels des Heizstroms beheizt oder mit einer Wechselspannung mit dem Frequenzdurchlauf beaufschlagt, um die Belegung des Sitzes festzustellen. Eine derartige Ausführung benötig möglichst wenig zusätzliche Elemente im Vergleich zu einer klassischen Sitzheizung, da keine zusätzlichen Anschlüsse und dergleichen notwendig sind.

Auch erleichtert die alternative Verwendung des Heizstromes und der Wechselspannung zum Ermitteln des Belegungszustandes es, unterschiedliche Frequenzen beziehungsweise Spannungen oder Stromstärken zu verwenden. Dies hat auch den Vorteil, dass die entsprechenden Bauteile jeweils nur für einen bestimmten Anwendungsbereich ausgelegt sein müssen. So können beispielsweise für das Messen der Spannung sehr sensitive Bauteile verwendet werden, die beim Anlegen des Heizstromes beschädigt werden würden.

Grundsätzlich können mehrere Heizeinrichtungen in einem Sitz verbaut sein und für das erfindungsgemäße Verfahren verwendet werden. Es ist jedoch ausreichend, wenn nur eine einzige Heizeinrichtung vorgesehen ist oder verwendet wird. Das erfindungsgemäße Verfahren benötig im Gegensatz zu anderen Verfahren lediglich eine Heizeinrichtung, da keine kapazitive Messung zwischen zwei verschiedenen Heizeinrichtungen durchgeführt wird. Dies erleichtert zum einen die grundsätzliche Produktion und Integration in einem Sitz, zum anderen wird hierdurch der Verkabelungsaufwand nicht erhöht.

Generell können aber auch mehrere Heizeinrichtungen verwendet werden. In diesem Fall ist es jedoch bevorzugt, dass zum Ermitteln des Belegungszustandes des Sitzes jede Heizeinrichtung separat ausgewertet wird. Anders ausgedrückt wird das erfindungsgemäße Verfahren für und mit jeder Heizeinrichtung einzeln ausgeführt und am Schluss - beispielsweise bei drei Heizeinrichtungen - das Ergebnis verglichen und bei unterschiedlichen Ergebnissen die Mehrheit der Ergebnisse als finales Ergebnis angesehen.

Theoretisch kann die Wechselspannung zum Ermitteln des Belegungszustandes eines Sitzes, die an die Heizeinrichtung angelegt wird, beliebig ausgebildet sein. Vorteilhaft ist es jedoch, wenn eine wellenartige Wechselspannung verwendet wird. Bevorzugt ist es hierbei, dass eine quadratische oder sinusförmige Wechselspannung verwendet wird. Eine sinusförmige Wechselspannung weist erfahrungsgemäß geringe elektromagnetische Wechselwirkungen auf, so dass die ermittelten Werte ohne große Spitzen und dergleichen vorliegen.

Die Energie der Wechselspannung kann relativ gering sein. So reicht es bereits aus, wenn die Amplitude der Wechselspannung im Bereich zwischen 0,05 Volt und 12 Volt gewährt wird. Erfahrrungen haben gezeigt, dass insbesondere ein Bereich zwischen ab 0,5 Volt und 12 Volt zu bevorzugten ist, da hier sichergestellt ist, dass ausreichend hohe Signale auch wieder ausgewertet werden können. Der Bereich kann aber auch zischen 1 Volt und 5 Volt liegen.

Allgemein können verschiedene Auswertungen für den Unterschied zwischen dem Amplitudenverlauf der Spannung und dem Referenzverlauf herangezogen werden. Bevorzugt ist es, wenn der Unterschied basierend auf der absoluten maximalen Differenz bei derselben Frequenz, basierend auf mehreren absoluten maximalen Differenzen bei mehreren diskreten Frequenzen, basierend auf der durchschnittlichen Differenz über den gesamten Frequenzverlauf, basierend auf einer Fläche zwischen den Verläufen und/oder basierend einer Kombination einer der obigen Varianten berechnet wird. Es hat sich auch herausgestellt, dass es alternativ oder zusätzlich vorteilhaft sein kann, die beiden Frequenzverläufe einer KI zur Verfügung zu stellen, die eine entsprechende Auswertung nach einem Lernvorgang durchführt.

In bestimmten Anwendungen ist es bevorzugt, wenn der Referenzverlauf mittels eines Kalibrierungsschrittes ermittelt wird, bei dem an die Heizeinrichtung eines unbelegten Sitzes eine Wechselspannung mit einem Frequenzdurchlauf von 10 MHz bis 40 MHz oder einem Teilbereich davon angelegt wird und über die beiden Anschlüsse der Amplitudenverlauf der Spannung als Referenzverlauf bestimmt wird. Frequenzdurchlauf sollte des selbe sein, der im Anschluss auch für die Ermittlung des Belegungszustandes verwendet wird.

In diesem Zusammenhang kann es bevorzugt sein, verschiedene Referenzverläufe zumessen, um Erkenntnisse zu erhalten, bei welchen Frequenzen besonders gute und aussagekräftige Signale entstehen. Hierzu können Tests durchgeführt werden, um einen Referenzverlauf beziehungsweise einen Frequenzverlauf zu ermitteln, in dem ein besonders großer Unterschied zwischen einem belegten Sitz und einem unbelegten Sitz messbar ist. Auch ist es möglich mehrere Messungen durchzuführen und anschließend diese zu mitteln, um den Referenzverlauf zu berechnen, der der Auswertung zu Grunde gelegt wird.

Es kann auch nur eine bestimmte Frequenz oder ein sehr schmaler Frequenzbereich zum Ermitteln des Belegungszustandes herangezogen werden. Dann ist es vorteilhaft, wenn dazu an die Heizeinrichtung die Wechselspannung mit einem Teilbereich, insbesondere mit einer Frequenz des Frequenzdurchlaufs von 10 MHz bis 40 MHz angelegt wird. Zuvor wird eine Ermittlungsfrequenz beziehungsweise ein Ermittlungsfrequenzbereich durch einen Ermittlungsschritt bestimmt, bei dem an die Heizeinrichtung eines unbelegten Sitzes eine Wechselspannung mit einem Frequenzdurchlauf ab mindestens 10 MHz ansteigend angelegt wird. Die Werte der Amplitude der Spannung über die beiden Anschlüsse werden aufgezeichnet. An die Heizeinrichtung eines belegten Sitzes wird eine Wechselspannung mit dem Frequenzdurchlauf angelegt und die Werte der Amplitude der Spannung über die beiden Anschlüsse werden ebenfalls aufgezeichnet. Anschließend wird die Ermittlungsfrequenz bei einer Frequenz oder einem Frequenzbereich des Frequenzdurchlaufes gewählt, bei der der Wert der Amplitude der Spannung zwischen dem unbelegten und dem belegten Sitz eine Differenz von mindestens 5% aufweist.

Auf diese Art wird erreicht, dass ein Frequenzbereich für die Ermittlung des Belegungszustandes gewählt wird, der eine besonders hohe Abweichung hat. Erfahrungen haben gezeigt, dass über den gesamten Frequenzbereich bestimmte Bereiche höhere Abweichungen haben als andere. Dies hängt beispielsweise zum einen vom exakten Aufbau des Heizelementes und zum anderen von dessen Einbau und anderen Umgebungsvarianten ab.

Bevorzugt ist es, wenn zum Ermitteln des Referenzverlaufes an die Heizeinrichtung des unbelegten Sitzes die Wechselspannung mit einem Frequenzverlauf von 10 MHz bis 40 MHz oder einem Teilbereich davon angelegt wird und über die beiden Anschlüsse der Amplitudenverlauf der Spannung über den Frequenzverlauf bestimmt wird. Im Anschluss wird der Amplitudenverlauf der Spannung als Referenzverlauf definiert und gespeichert, so dass er zur Auswertung des Belegungszustandes herangezogen werden kann.

Es hat sich gezeigt, dass es zwar grundsätzlich möglich ist, vor der Inbetriebnahme einen Referenzverlauf zu ermitteln beziehungsweise zu definieren und über verschiedene Ausführungsformen und Einbauten anzuwenden. Es ist jedoch bevorzugt und genauer, einen derartigen Referenzverlauf für jede Heizeinrichtung beziehungsweise Sitzheizung im eingebauten Zustand einzeln zu ermitteln. Es kann beispielsweise bevorzugt sein, wenn derartige Sitzheizungen in Zügen verwendet werden, dies regelmäßig, insbesondere über Nacht, durchzuführen, wenn die Züge beispielsweise im Depot sind und so sichergestellt ist, dass keine Person auf dem Sitz sitzt. Dies ermöglicht es auch, Alterungserscheinungen und dergleichen zu berücksichtigen.

Es kann auch vorgesehen sein, dass regelmäßig die Wechselspannung mit einem Frequenzverlauf von 10 MHz bis 40 MHz oder einen Teilbereich davon an den Sitz angelegt wird, dass über die beiden Anschlüsse der Amplitudenverlauf der Spannung über den Frequenzdurchlauf bestimmt und abgespeichert wird. Ferner wird der aktuelle Amplitudenverlauf der Spannung mit einem vorherigen Amplitudenverlauf der Spannung als Referenzverlauf verglichen. Auf diese Weise kann in vorgegebenen Intervallen die Sitzbelegung ermittelt werden. Auch kann eine Überprüfung stattfinden, wenn die Sitzheizung aktiviert wird oder ist, um eine unnötige Beheizung zu verhindern.

Der Vorteil der Erfindung ist, dass sie sowohl bei Heizeinrichtungen verwendet werden kann, welche Heizelemente aufweisen, die in Serie oder parallel zueinander geschaltet sind als auch eine Kombination hiervon aufweisen. Dies ist insbesondere bei anderen auf kapazitiven Techniken basierenden Sitzbelegungseinrichtungen oft zwingend der Fall.

Grundsätzlich können die Heizelemente der Heizeinrichtung aus beliebigen Materialien hergestellt sein. Besonders eignen sich hierfür Heizgarn, Heizlitzen, Heizdrähte, Heizbirnen, Umwindegarne, auf textilen Flächenware aufgestickte Stromleitern und/oder auf Flächenware aufgedruckte Stromleitungen. Generell sind auch Kombinationen hiervon möglich und einsetzbar.

Die erfindungsgemäße Sitzheizung ist dadurch weitergebildet, dass die Ermittlungseinrichtung ausgelegt und eingerichtet ist, die Wechselspannung mit einem Frequenzdurchlauf von 10 MHz bis 40 MHz oder einem Teilbereich davon anzulegen. Die Ermittlungseinrichtung weist eine Sensoreinrichtung auf, die wiederum ausgelegt und eingerichtet ist, über die beiden Anschlüsse den Amplitudenverlauf der Spannung über den Referenzdurchlauf zu bestimmen. Ferner ist die Ermittlungseinrichtung ausgelegt und eingerichtet, den bestimmten Amplitudenverlauf der Spannung mit einem Referenzverlauf zu vergleichen und den Sitz als belegt zu ermitteln, wenn der bestimmte Amplitudenverlauf der Spannung mindestens um 5% vom Referenzverlaufes abweicht.

Anders ausgedrückt kann eine Sitzeinrichtung mit entsprechenden Ermittlungs- und Sensoreinrichtungen ausgestaltet sein, um das erfindungsgemäße Verfahren durchzuführen. Bevorzugt ist es hierbei, wenn die Energieversorgungs- und Steuerungseinrichtung ausgelegt und eingerichtet sind, die Heizeinrichtung entweder mit Heizstrom oder mit einer Wechselspannung zum Ermitteln des Belegungszustandes zu versorgen. Dies bietet den Vorteil, dass die Sensoreinrichtung beispielsweise sensitiver oder weniger robust ausgelegt werden kann. Die Sensoreinrichtung kann mit Bauteilen ausgestaltet sein, die grundsätzlich nicht für die höhere Energie des Heizstromes geeignet sind, jedoch ein hochgenaues Messen der Wechselspannung beziehungsweise deren Amplitudenverlauf ermöglichen.

Grundsätzlich kann der Frequenzverlauf auch von höheren Frequenzen in Richtung niedriger Frequenzen verlaufen.

Die erfindungsgemäße Sitzheizung kann bevorzugt in Fahrzeugen, beispielsweise einem Zug und dort in einem Personenwagen eingesetzt werden. Sie kann jedoch auch im Gesundheitswesen oder in Pflegeheimen verwendet werden, um die Belegung von Betten zu ermitteln. In anderer Weise ist es auch möglich, über derartige Sitzheizungen die Belegung von Wartezimmern oder grundsätzlich die Belegung von Sitzplätzen zu ermitteln.

Die Erfindung wird nachfolgend anhand eines schematischen Ausführungsbeispieles unter Bezugnahme auf die Figuren näher erläutert. Hierbei zeigen:
- Fig. 1: zwei Sitze, deren Belegung ermittelt werden soll;
- Fig. 2: eine schematische Darstellung einer Heizeinrichtung;
- Fig. 3: eine stark vereinfachte funktionsbasierte Darstellung einer erfindungsgemäßen Sitzheizung;
- Fig. 4: einen Amplitudenverlauf der Spannung bei unterschiedlichen Frequenzen eines belegten und eines unbelegten Sitzes; und
- Fig. 5: den Unterschied zwischen den beiden Amplitudenverläufen der Figur 4 über den Frequenzverlauf.

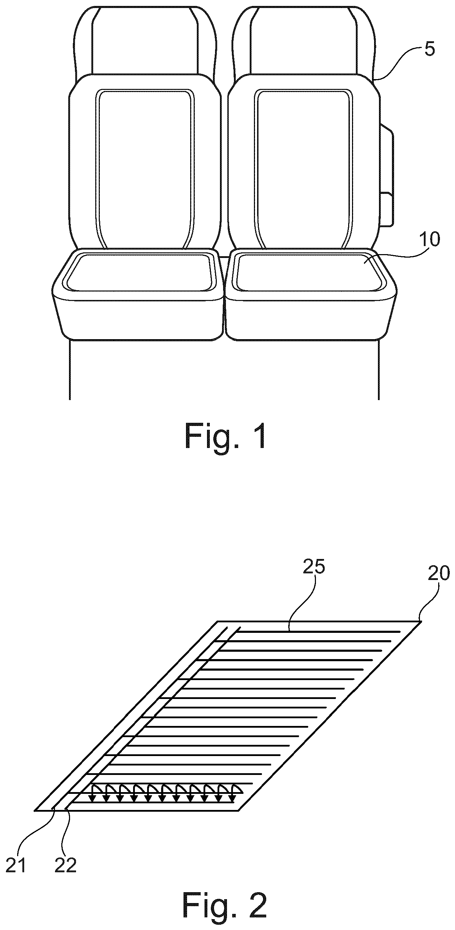

In Fig. 1 ist eine schematische Darstellung zweier Sitze 5 gezeigt. Diese weisen eine Sitzfläche, eine Rückenfläche und eine Kopfunterstützung auf. In der Sitzfläche ist angedeutet eine erfindungsgemäße Sitzheizung 10 vorgesehen. Diese kann grundsätzlich zusätzlich oder alternativ auch im Rückenlehnenbereich integriert werden. Für die Erfindung ist es jedoch ausreichend, lediglich eine einzige Sitzheizung 10 vorzusehen.

Fig. 2 zeigt eine schematische Darstellung des internen Aufbaus einer Heizeinrichtung 20 einer erfindungsgemäßen Sitzeinrichtung 10. Die Heizeinrichtung 20 weist einen ersten und einen zweiten Anschluss 21, 22 auf. Von diesem erstrecken sich entsprechende Heizelemente 25, die sowohl in Serie als auch parallel oder in Kombination hiervon verschaltet sein können. Durch das Anlegen eines Stroms an die Anschlüsse 21, 22 werden die Heizelemente 25 erwärmt und geben diese Wärme an das umgebende Material ab. Die Erwärmung findet meist aufgrund von Widerstandsverlusten des Stroms statt.

Die Heizelemente 25 können beispielsweise aus einem speziellen Heizgarn; Heizlitzen, Heizdrähten, Heizzwirnen, Umwindegarnen oder auch aus auf textile Flächenware aufgestickten Stromleitern herstellt werden. Ebenfalls ist es möglich, dass sie als auf textile Flächenware aufgedruckte Stromleiter ausgeführt sind. Grundsätzlich sind auch Kombinationen der verschiedenen Ausführungen möglich.

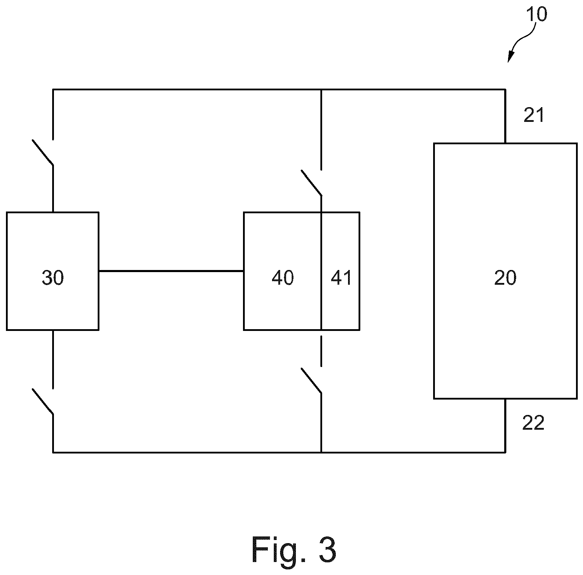

Fig. 3 ist eine stark vereinfachte funktionsbasierte Darstellung einer erfindungsgemäßen Sitzheizung 10. Diese weist wiederum die Heizeinrichtung 20 mit ihren beiden Anschlüssen 21, 22 auf. Zum Betrieb als Sitzheizung 10 sind die beiden Anschlüsse 21, 22 mit einer Energieversorgungs- und Steuereinrichtung 30 verbunden. Im Betrieb wird über die Energieversorgungs- und Steuereinrichtung 30 ein Strom durch die Heizeinrichtung 20 geleitet, so dass sich die Heizelemente 25 erwärmen und die Heizeinrichtung 20 warm wird. Hierbei kann sowohl ein kontinuierlicher als auch ein modulierter Strom angelegt werden.

Entsprechend der Erfindung ist zusätzlich eine Ermittlungseinrichtung 40 vorgesehen, welche eine Sensoreinrichtung 41 aufweist. Es ist nicht zwingend erforderlich, dass die Sensoreinrichtung 41 einen Teil der Ermittlungseinrichtung 40 ist, sondern sie kann der Ermittlungseinrichtung 40 auch nur logisch zugeordnet sein. Wesentlich für die Erfindung ist es, dass die Ermittlungseinrichtung 40 und die Sensoreinrichtung 41 zusammenwirken, um das erfindungsgemäße Verfahren auszuführen.

Grundsätzlich ist es nur erforderlich die Heizeinrichtung 20 im Sitz 5 zu verbauen, die weiteren Elemente können außerhalb des Sitzes 5 über entsprechende Verkabelungen verbunden angeordnet sein.

Um nun mit dem erfindungsgemäßen Verfahren die Sitzbelegung zu ermitteln, wird dies beispielsweise über die Energieversorgungs- und Steuereinrichtung 30 eingeleitet. Es kann jedoch auch über eine separate übergeordnete Einrichtung erfolgen. Zunächst wird sichergestellt, dass die Energieversorgungs- und Steuereinrichtung 30 die Heizeinrichtung 20 nicht mehr mit Strom versorg. Dies kann beispielsweise über die angedeuteten Schalter erfolgen. Im Anschluss wird von der Ermittlungseinrichtung 40 eine Wechselspannung, bei der es sich beispielsweise um eine Sinusspannung handelt, an die beiden Anschlüsse 21, 22 der Heizeinrichtung 20 angelegt. Gleichzeitig wird über die Sensoreinrichtung 41, bevorzugt ebenfalls an den beiden Anschlüssen 21, 22, der Amplitudenverlauf der Spannung aufgezeichnet.

Beispielsweise kann die Wechselspannung einen Frequenzdurchlauf von 10 MHz bis 40 MHz aufweisen. Im Anschluss wird von der Ermittlungseinrichtung 40 der gemessene Amplitudenverlauf der Spannung mit einem Referenzverlauf verglichen und - sofern eine Abweichung von mehr als 5% festgestellt wird - darauf geschlossen, dass der Sitz 5 belegt ist.

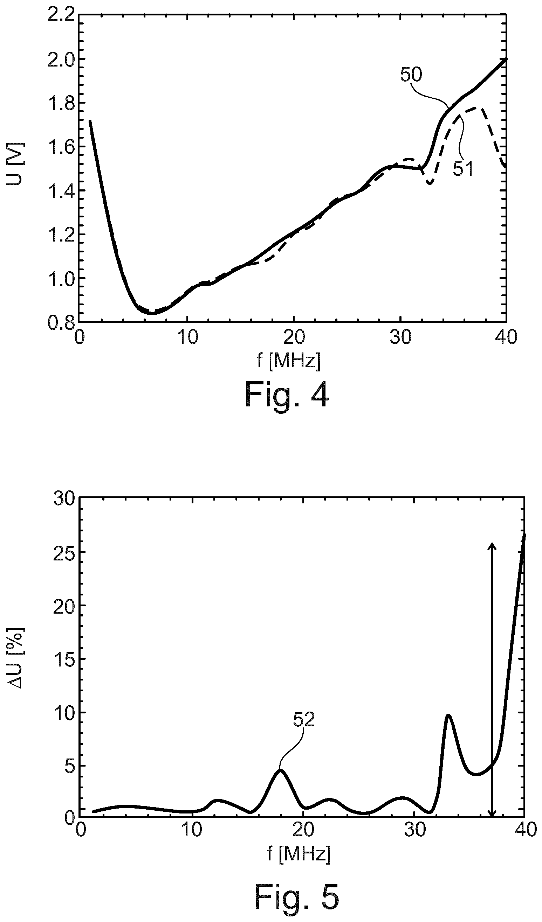

Zur Verdeutlichung wird im Folgenden auf die Figuren 4 und 5 Bezug genommen. Fig. 4 zeigt exemplarisch zwei Amplitudenverlauf der Spannung über einen Frequenzverlauf von wenigen MHz bis 40 MHz. Hierbei handelt es sich einmal um einen Referenzverlauf der Spannung 50 und einmal um einen gemessenen Verlauf der Spannung 51 eines belegten Sitzes. Wie ersichtlich, unterscheiden sich die beiden Verläufe deutlich.

Abhängig von der exakten Auslegung der Heizeinrichtung 20, den verwendeten Kabelverbindungen aber auch der Person, die auf dem Sitz 5 Platz genommen hat, unterscheiden sich die Amplitudenverläufe der Referenzspannung sowie der gemessenen Spannung deutlicher oder weniger deutlich.

In Fig. 5 ist nur die Differenz 52 zwischen den dargestellten Amplitudenverläufe 50, 51 aus Fig. 4 gezeigt. Wie zu erkennen ist, tritt insbesondere im Bereich zwischen 30 MHz und 40 MHz ein deutlicher Unterschied auf. Daher kann es bevorzugt sein, auch nur bestimmte Frequenzbereiche im Frequenzdurchlauf zu berücksichtigen. Auch ist es möglich, lediglich eine einzige Frequenz vorzusehen.

Zur Auswertung des Unterschiedes zwischen dem ermittelten Frequenzverlauf 51 und dem Referenzverlauf 50 können verschiedene Verfahren angewendet werden. In Fig. 5 wurde die absolute Differenz 52 zwischen den beiden Verläufen angegeben. Es kann jedoch auch beispielsweise die Fläche des Unterschieds analysiert werden. In ähnlicher Weise kann auch der maximal größte Unterschied oder der Unterschied bei bestimmten exakten Frequenzen berücksichtigt werden. Es ist auch möglich, hierbei verschiedene Auswertungen zu kombinieren.

Zum Ermitteln des Referenzfrequenzverlaufes 50 können verschiedene Verfahren verwendet werden. Zum einen kann nach dem Einbau der erfindungsgemäßen Sitzheizung 10 einmal eine entsprechende Messung durchgeführt werden und dieser Spannungsverlauf als Referenzverlauf gespeichert werden. Es ist aber auch möglich, den Referenzverlauf mehrmals täglich neu zu ermitteln, um beispielsweise Temperaturschwankungen oder Alterungsabweichungen zu berücksichtigen. Dies sollte idealerweise dann erfolgen, wenn die Belegung des Sitzes bekannt ist.

Mit dem erfindungsgemäßen Verfahren und der erfindungsgemäßen Sitzheizung ist es einfach und effizient möglich, den Belegungszustand eines Sitzes zu ermitteln.

## Patentansprüche

1. Verfahren zum Ermitteln eines Belegungszustandes eines Sitzes (5) mittels einer im Sitz vorgesehenen Sitzheizung (10), welche eine Heizeinrichtung (20) mit mehreren, insbesondere länglichen, Heizelementen (25) und einen ersten (21) und einen zweiten Anschluss (22) aufweist,
**dadurch gekennzeichnet,**
**dass** an die Heizeinrichtung (20) zum Ermitteln des Belegungszustandes eine Wechselspannung mit einem Frequenzdurchlauf von 10 MHz bis 40 MHz oder einem Teilbereich davon angelegt wird,
**dass** über die beiden Anschlüsse (21, 22) der Amplitudenverlauf der Spannung (51) über den Frequenzdurchlauf bestimmt wird,
**dass** die Amplitudenverlauf der Spannung (51) mit einem Referenzverlauf (50) verglichen wird und
**dass** der Sitz (5) als belegt erkannt wird, wenn der Amplitudenverlauf der Spannung (51) sich mindestens 5 % vom Referenzverlauf (50) unterscheidet.

2. Verfahren nach Anspruch 1,
**dadurch gekennzeichnet,**
**dass** die Heizeinrichtung (20) zum Erwärmen des Sitzes (5) mit einem Heizstrom betrieben wird,
**dass** der Heizstrom unterschiedlich zu der Wechselspannung zum Ermitteln des Belegungszustandes ist, und
**dass** jeweils der erste und der zweite Anschluss verwendet wird.

3. Verfahren nach Anspruch 1 oder 2,
**dadurch gekennzeichnet,**
**dass** eine einzige Heizeinrichtung (20) verwendet wird.

4. Verfahren nach Anspruch 1 oder 2,
**dadurch gekennzeichnet,**
**dass** mehrere Heizeinrichtungen (20) verwendet werden, wobei zum Ermitteln des Belegungszustandes des Sitzes (5) jede Heizeinrichtung separat ausgewertet wird.

5. Verfahren nach einem der Ansprüche 1 bis 4,
**dadurch gekennzeichnet,**
**dass** eine wellenartige, insbesondere quadratische oder sinusförmige, Wechselspannung verwendet wird.

6. Verfahren nach einem der Ansprüche 1 bis 5,
**dadurch gekennzeichnet,**
**dass** die Amplitude der Wechselspannung im Bereich zwischen 0,05 V und 12 V gewählt wird.

7. Verfahren nach einem der Ansprüche 1 bis 6,
**dadurch gekennzeichnet,**
**dass** ein Unterschied zwischen dem Amplitudenverlauf der Spannung (51) und dem Referenzverlauf (50) basierend auf der absoluten maximalen Differenz bei derselben Frequenz, mehreren absoluten maximalen Differenz bei mehreren diskreten Frequenzen, der durchschnittlichen Differenz über den Frequenzdurchlauf, eine Fläche zwischen den Verläufen und/oder einer Kombination der Varianten berechnet wird.

8. Verfahren nach einem der Ansprüche 1 bis 7,
**dadurch gekennzeichnet,**
**dass** der Referenzverlauf (50) mittels eines Kalibrierungsschrittes ermittelt wird, bei dem an die Heizeinrichtung eines unbelegten Sitzes (5) eine Wechselspannung mit einem Frequenzdurchlauf von 10 MHz bis 40 MHz oder einem Teilbereich davon angelegt wird und über die beiden Anschlüsse (21, 22) der Amplitudenverlauf der Spannung als Referenzverlauf (50) bestimmt wird.

9. Verfahren nach einem der Ansprüche 1 bis 8,
**dadurch gekennzeichnet,**
**dass**, wenn an die Heizeinrichtung zum Ermitteln des Belegungszustandes die Wechselspannung mit einem Teilbereich, insbesondere mit einer Frequenz, des Frequenzdurchlauf von 10 MHz bis 40 MHz angelegt wird, eine Ermittlungsfrequenz mittels eines Ermittlungsschrittes ermittelt wird, bei dem an die Heizeinrichtung (20) eines unbelegten Sitzes (5) eine Wechselspannung mit einem Frequenzdurchlauf ab mindestens 10 MHz ansteigend angelegt wird, die Werte der Amplitude der Spannung über die beiden Anschlüsse (21, 22) aufgezeichnet werden, an die Heizeinrichtung (20) eines belegten Sitzes (5) eine Wechselspannung mit dem Frequenzdurchlauf angelegt wird, die Werte der Amplitude der Spannung über die beiden Anschlüsse (21, 22) aufgezeichnet werden und die Ermittlungsfrequenz bei der Frequenz des Frequenzdurchlaufes gewählt wird, bei der der Wert der Amplitude der Spannung zwischen unbelegtem und belegtem Sitz eine Differenz von mindestens 5% aufweist.

10. Verfahren nach einem der Ansprüche 1 bis 8,
**dadurch gekennzeichnet,**
**dass** zum Ermitteln des Referenzverlaufes an die Heizeinrichtung (20) des unbelegten Sitzes (5) die Wechselspannung mit einem Frequenzdurchlauf von 10 MHz bis 40 MHz oder einem Teilbereich davon angelegt wird,
**dass** über die beiden Anschlüsse (21, 22) der Amplitudenverlauf der Spannung (51) über den Frequenzdurchlauf bestimmt wird, und
**dass** der Amplitudenverlauf der Spannung als Referenzverlauf (50) definiert wird.

11. Verfahren nach einem der Ansprüche 1 bis 8,
**dadurch gekennzeichnet,**
**dass** regelmäßig die Wechselspannung mit einem Frequenzdurchlauf von 10 MHz bis 40 MHz oder einem Teilbereich davon an den Sitz (5) gelegt wird,
**dass** über die beiden Anschlüsse (21, 22) der Amplitudenverlauf der Spannung (51) über den Frequenzdurchlauf bestimmt und abgespeichert wird,
**dass** der aktuelle Amplitudenverlauf der Spannung (51) mit einem vorherigen Amplitudenverlauf der Spannung als Referenzverlauf (50) verglichen wird.

12. Verfahren nach einem der Ansprüche 1 bis 11,
**dadurch gekennzeichnet,**
**dass** die mehreren Heizelemente (25) ausgewählt werden aus Heizgarn, Heizlitzen, Heitzdrähten, Heizzwirnen, Umwindegarnen, auf textile Flächenware aufgestickten Stromleitern und/oder auf textile Flächenware aufgedruckten Stromleitern.

13. Sitzheizung (10) mit einer Ermittlungseinrichtung (40) eines Belegungszustandes eines Sitzes (5),
mit einer Heizeinrichtung (20) die mehrere, insbesondere längliche, Heizelemente (25), einem ersten (21) und einem zweiten Anschluss (22) aufweist,
mit einer Energieversorgungs- und Steuerungseinrichtung (30) zum Versorgen der Heizeinrichtung (20) mit Heizenergie durch das Anlegen eines Heizstromes,
wobei die Ermittlungseinrichtung (40) ausgelegt und eingerichtet ist, zum Ermitteln des Belegungszustandes des Sitzes (5) eine Wechselspannung anzulegen
**dadurch gekennzeichnet,**
**dass** die Ermittlungseinrichtung (40) ausgelegt und eingerichtet die Wechselspannung mit einem Frequenzdurchlauf von 10 MHz bis 40 MHz oder einem Teilbereich davon anzuglegen,
**dass** die Ermittlungseinrichtung eine Sensoreinrichtung (41) aufweist, die ausgelegt und eingerichtet ist, über die beiden Anschlüsse (21, 22) den Amplitudenverlauf der Spannung (51) über den Frequenzdurchlauf zu bestimmen, und
**dass** die Ermittlungseinrichtung (40) ausgelegt und eingerichtet ist, den bestimmten Amplitudenverlauf der Spannung (51) mit einem Referenzverlauf (50) zu vergleichen und den Sitz (5) als belegt zu ermitteln, wenn der bestimmte Amplitudenverlauf der Spannung (51) mindestens um 5 % vom Referenzverlauf (50) abweicht.

14. Sitzheizung (10) nach Anspruch 13,
**dadurch gekennzeichnet,**
**dass** die Energieversorgungs- und Steuerungseinrichtung (30) ausgelegt und eingerichtet ist, die Heizeinrichtung (20) entweder mit dem Heizstrom oder mit der Wechselspannung zum Ermitteln des Belegungszustandes zu versorgen.

15. Fahrzeug, insbesondere Zug,
**gekennzeichnet durch** ,
eine Sitzheizung (10) nach Anspruch 13 oder 14.

## Claims

1. Method for determining an occupancy state of a seat (5) by means of a seat heating (10) provided in the seat, which comprises a heating device (20) with a plurality of, in particular elongate, heating elements (25) and a first (21) and a second terminal (22),
**characterized in**
**that** an alternating voltage with a frequency sweep of 10 MHz to 40 MHz or a sub-range thereof is applied to the heating device (20), in order to determine the occupancy state,
**that** the amplitude curve of the voltage (51) is determined throughout the frequency sweep via the two terminals (21, 22),
**that** the amplitude curve of the voltage (51) is compared with a reference curve (50), and
**that** the seat (5) is recognized as occupied if the amplitude curve of the voltage (51) differs by at least 5 % from the reference curve (50).

2. Method according to claim 1,
**characterized in**
**that** the heating device (20) for heating the seat (5) is operated with a heating current,
**that** the heating current is different from the alternating voltage for determining the occupancy state, and
**that** in each case the first and second terminals are used.

3. Method according to claim 1 or 2,
**characterized in**
**that** a single heating device (20) is used.

4. Method according to claim 1 or 2,
**characterized in**
**that** a plurality of heating devices (20) are used, wherein each heating device is evaluated separately to determine the occupancy state of the seat (5).

5. Method according to any one of claims 1 to 4,
**characterized in**
**that** a wave-like, in particular square or sinusoidal, alternating voltage is used.

6. Method according to any one of claims 1 to 5,
**characterized in**
**that** the amplitude of the alternating voltage is selected in the range between 0.05 V and 12 V.

7. Method according to any one of claims 1 to 6,
**characterized in**
**that** a difference between the amplitude curve of the voltage (51) and the reference curve (50) is calculated based on the absolute maximum difference at the same frequency, a plurality of absolute maximum differences at a plurality of discrete frequencies, the average difference throughout the frequency sweep, a surface area between the curves and/or a combination of the variants.

8. Method according to any one of claims 1 to 7,
**characterized in**
**that** the reference curve (50) is determined by means of a calibration step in which an alternating voltage with a frequency sweep of 10 MHz to 40 MHz or a sub-range thereof is applied to the heating device of an unoccupied seat (5) and the amplitude curve of the voltage is determined as the reference curve (50) via the two terminals (21, 22).

9. Method according to any one of claims 1 to 8,
**characterized in**
**that**, when the alternating voltage with a sub-range, in particular with a frequency, of the frequency sweep from 10 MHz to 40 MHz is applied to the heating device for determining the occupancy state, a determination frequency is determined by means of a determination step in which an increasing, alternating voltage with a frequency sweep starting from at least 10 MHz is applied to the heating device (20) of an unoccupied seat (5), the values of the amplitude of the voltage via the two terminals (21, 22) are recorded, an alternating voltage with the frequency sweep is applied to the heating device (20) of an occupied seat (5), the values of the amplitude of the voltage are recorded via the two terminals (21, 22) and the determination frequency is selected at the frequency of the frequency sweep at which the value of the amplitude of the voltage between the unoccupied and occupied seat has a difference of at least 5%.

10. Method according to any one of claims 1 to 8,
**characterized in**
**that** the alternating voltage is applied to the heating device (20) of the unoccupied seat (5) with a frequency sweep of 10 MHz to 40 MHz or a sub-range thereof, in order to determine the reference curve,
**that** the amplitude curve of the voltage (51) is determined via the two terminals (21, 22) throughout the frequency sweep, and
**that** the amplitude curve of the voltage is defined as the reference curve (50).

11. Method according to any one of claims 1 to 8,
**characterized in**
**that** the alternating voltage is regularly applied to the seat (5) with a frequency sweep of 10 MHz to 40 MHz or a sub-range thereof,
**that** the amplitude curve of the voltage (51) via the two terminals (21, 22) is determined and stored throughout the frequency sweep,
**that** the current amplitude curve of the voltage (51) is compared with a previous amplitude curve of the voltage as a reference curve (50).

12. Method according to any one of claims 1 to 11,
**characterized in**
**that** the plurality of heating elements (25) are selected from heating yarns, heating strands, heating wires, heating threads, wrapping yarns, current conductors embroidered onto textile fabrics and/or current conductors printed onto textile fabrics.

13. Seat heating (10), comprising a device (40) for determining an occupancy state of a seat (5),
comprising a heating device (20) which comprises several, in particular elongated, heating elements (25), a first (21) and a second terminal (22),
with a power supply and control device (30) for supplying the heating device (20) with heating energy by applying a heating current,
wherein the determining device (40) is configured and set up to apply an alternating voltage for detecting the occupancy state of the seat (5),
**characterized in**
**that** the determining device (40) is configured and set up to apply the alternating voltage with a frequency sweep of 10 MHz to 40 MHz or a sub-range thereof,
**that** the determining device comprises a sensor device (41) which is configured and set up to determine the amplitude curve of the voltage (51) throughout the frequency sweep via the two terminals (21, 22), and
**that** the determining device (40) is configured and set up to compare the determined amplitude curve of the voltage (51) with a reference curve (50) and to determine the seat (5) as occupied if the determined amplitude curve of the voltage (51) deviates from the reference curve (50) by at least 5%.

14. Seat heating (10) according to claim 13,
**characterized in**
**that** the energy supply and control device (30) is configured and set up to supply the heating device (20) either with the heating current or with the alternating voltage for determining the occupancy state.

15. Vehicle, in particular train,
**characterized by**
a seat heating (10) according to claim 13 or 14.

## Revendications

1. Procédé de détermination d'un état d'occupation d'un siège (5) au moyen d'un dispositif de chauffage de siège (10) prévu dans le siège, lequel présente un système de chauffage (20) avec plusieurs éléments chauffants (25), en particulier allongés, et une première (21) et une seconde borne (22),
caractérisé en qu'
une tension alternative avec un balayage de fréquence de 10 MHz à 40 MHz ou une plage partielle de celui-ci est appliquée sur le système de chauffage (20) pour déterminer l'état d'occupation,
que la courbe d'amplitude de la tension (51) sur le balayage de fréquence est définie par l'intermédiaire des deux bornes (21, 22),
que la courbe d'amplitude de la tension (51) est comparée à une courbe de référence (50), et
que le siège (5) est identifié comme étant occupé lorsque la courbe d'amplitude de la tension (51) se distingue de moins de 5 % de la courbe de référence (50).

2. Procédé selon la revendication 1,
**caractérisé en ce que**
le système de chauffage (20) fonctionne pour réchauffer le siège (5) avec un courant de chauffage,
que le courant de chauffage est différent de la tension alternative pour déterminer l'état d'occupation, et
que respectivement la première et la deuxième borne sont utilisées.

3. Procédé selon la revendication 1 ou 2,
**caractérisé en ce qu'**
un unique système de chauffage (20) est utilisé.

4. Procédé selon la revendication 1 ou 2,
**caractérisé en ce que**
plusieurs systèmes de chauffage (20) sont utilisés, dans lequel chaque système de chauffage est évalué séparément pour déterminer l'état d'occupation du siège (5).

5. Procédé selon l'une quelconque des revendications 1 à 4,
**caractérisé en ce qu'**
une tension alternative de type onde, en particulier carrée ou sinusoïdale, est utilisée.

6. Procédé selon l'une quelconque des revendications 1 à 5,
**caractérisé en ce que**
l'amplitude de la tension alternative est sélectionnée dans la plage entre 0,05 V et 12 V.

7. Procédé selon l'une quelconque des revendications 1 à 6,
**caractérisé en ce qu'**
une différence entre la courbe d'amplitude de la tension (51) et la courbe de référence (50) est calculée sur la base de la différence maximale absolue pour la même fréquence, de plusieurs différences maximales absolues pour plusieurs fréquences discrètes, de la différence moyenne par l'intermédiaire du balayage de fréquence, une surface entre les courbes et/ou une combinaison des variantes.

8. Procédé selon l'une quelconque des revendications 1 à 7,
**caractérisé en ce que**
la courbe de référence (50) est déterminée au moyen d'une étape d'étalonnage, dans laquelle une tension alternative avec un balayage de fréquence de 10 MHz à 40 MHz ou une plage partielle de celui-ci est appliquée sur le système de chauffage d'un siège (5) non occupé et la courbe d'amplitude de la tension est définie comme courbe de référence (50) par l'intermédiaire des deux bornes (21, 22).

9. Procédé selon l'une quelconque des revendications 1 à 8,
**caractérisé en ce que**,
lorsque la tension alternative avec une plage partielle, en particulier avec une fréquence, du balayage de fréquence de 10 MHz à 40 MHz est appliquée sur le système de chauffage pour déterminer l'état d'occupation, une fréquence de détermination est déterminée au moyen d'une étape de détermination, dans laquelle une tension alternative avec un balayage de fréquence à partir d'au moins 10 MHz est appliquée de manière croissante sur le système de chauffage (20) d'un siège (5) non occupé, les valeurs de l'amplitude de la tension sont enregistrées sur les deux bornes (21, 22), une tension alternative avec la courbe de fréquence est appliquée sur le système de chauffage (20) d'un siège (5) occupé, les valeurs de l'amplitude de la tension sont enregistrées sur les deux bornes (21, 22) et la fréquence de détermination est sélectionnée pour la fréquence du balayage de fréquence, pour laquelle la valeur de l'amplitude de la tension entre siège non occupé et siège occupé présente une différence d'au moins 5 %.

10. Procédé selon l'une quelconque des revendications 1 à 8,
**caractérisé en ce que**
la tension alternative avec un balayage de fréquence de 10 MHz à 40 MHz ou une plage partielle de celui-ci est appliquée sur le système de chauffage (20) du siège (5) non occupé pour déterminer la courbe de référence,
que la courbe d'amplitude de la tension (51) sur le balayage de fréquence est définie par l'intermédiaire des deux bornes (21, 22), et
que la courbe d'amplitude de la tension est définie en tant que courbe de référence (50).

11. Procédé selon l'une quelconque des revendications 1 à 8,
**caractérisé en ce que**
régulièrement la tension alternative avec un balayage de fréquence de 10 MHz à 40 MHz ou une plage partielle de celui-ci est placée sur le siège (5),
que la courbe d'amplitude de la tension (51) sur le balayage de fréquence est définie par l'intermédiaire des deux bornes (21, 22) et est sauvegardée,
que la courbe d'amplitude actuelle de la tension (51) est comparée à une courbe d'amplitude précédente de la tension en tant que courbe de référence (50).

12. Procédé selon l'une quelconque des revendications 1 à 11,
**caractérisé en ce que**
les plusieurs éléments chauffants (25) sont sélectionnés parmi un fil chauffant, des torons chauffants, des fils métalliques chauffants, des fils retors chauffants, des fils d'enroulement, des conducteurs de courant enroulés sur des articles plats textiles et/ou des conducteurs de courant imprimés sur des articles plats textiles.

13. Dispositif de chauffage de siège (10) avec un système de détermination (40) d'un état d'occupation d'un siège (5),
avec un système de chauffage (20), qui présente plusieurs éléments chauffants (25) en particulier allongés, une première (21) et une seconde borne (22),
avec un système d'alimentation en énergie et de commande (30) destiné à alimenter le système de chauffage (20) en énergie de chauffage en appliquant un courant de chauffage,
dans lequel le système de détermination (40) est conçu et mis au point pour appliquer une tension alternative pour déterminer l'état d'occupation du siège (5),
**caractérisé en ce que**
le système de détermination (40) est conçu et mis au point pour appliquer la tension alternative avec un balayage de fréquence de 10 MHz à 40 MHz ou une plage partielle de celui-ci,
que le système de détermination présente un système de capteur (41), qui est conçu et mis au point pour définir la courbe d'amplitude de la tension (51) sur le balayage de fréquence par l'intermédiaire des deux bornes (21, 22), et
que le système de détermination (40) est conçu et mis au point pour comparer la courbe d'amplitude définie de la tension (51) à une courbe de référence (50) et pour déterminer le siège (5) comme étant occupé lorsque la courbe d'amplitude définie de la tension (51) s'écarte d'au moins 5 % de la courbe de référence (50).

14. Dispositif de chauffage de siège (10) selon la revendication 13,
**caractérisé en ce que**
le système d'alimentation en énergie et de commande (30) est conçu et mis au point pour alimenter le système de chauffage (20) soit en courant de chauffage soit en tension alternative pour déterminer l'état d'occupation.

15. Véhicule, en particulier train,
**caractérisé par**
un dispositif de chauffage de siège (10) selon la revendication 13 ou 14.
